# EUROPEAN PATENT APPLICATION

(11) **EP 2 351 977 A2**
(43) Date of publication of application: **03.08.2011**
(21) Application number: 10197100.0
(22) Date of filing: 28.12.2010
(51) Int. Cl.: F25C 5/00, F25C 5/08

(54) **Refrigerator and Ice-Making System Thereof**

(30) Priority: 08.01.2010 KR 20100001995
(71) Applicant: Samsung Electronics Co., Ltd., Suwon-si, Gyeonggi-do 506-762 (KR)
(72) Inventor: Shin, Young Shik, Gyeonggi-do (KR); Kim, Jeong Sook, Gyeonggi-do (KR); Yang, Yun Ho, Gyeonggi-do (KR); Jeong, Jin, Gyeonggi-do (KR)
(74) Representative: Grünecker, Kinkeldey, Stockmair & Schwanhäusser Anwaltssozietät

(57) **Abstract**

A refrigerator (1) and an ice-making system thereof, which may maximize space utilization inside a storage compartment. To this end, an ice-making device (110) is horizontally wide and vertically thin, and an ice discharge port of a dispenser unit is oriented obliquely or parallel to a surface of a storage compartment door to reduce the thickness of the dispenser unit. An icemaker and an ice storage container (140) to receive ice made by the icemaker are horizontally arranged parallel to each other within the ice-making device (110). A transfer channel is formed in an inner foamed portion of the storage compartment door to maximize space utilization inside the storage compartment and door shelves.

## Description

### BACKGROUND

### 1. Field

Embodiments relate to a refrigerator and an ice-making system thereof, which may maximize space utilization inside a storage compartment.

### 2. Description of the Related Art

Generally, a refrigerator includes a refrigerating compartment and a freezing compartment, which are separated from each other for optimum storage of a variety of food for a long term. The refrigerating compartment keeps food, such as vegetables, fruits, etc., at a temperature slightly above freezing. The freezing compartment keeps food, such as meats, fishes, etc., at a freezing temperature or less.

An ice-making device may be installed to freeze water into ice using cold air. The ice-making device includes a tray in which water is frozen into ice and a storage container for storage of ice.

Ice-making devices may be classified, based on ice-making methods thereof, into an indirect cooling type device, a tray of which is cooled by forcible convection of cold air to freeze water received in the tray into ice, and a direct cooling type device, tray or water of which comes into direct contact with a refrigerant pipe to make ice. The direct cooling type device has a relatively simple ice-making mechanism and rapid cooling speed.

To allow a user to retrieve ice made by the ice-making device from the outside of a storage compartment, a dispenser unit may be installed to a door of the storage compartment.

However, since the ice-making device occupies much interior space of the storage compartment and the dispenser unit also occupies much space of the storage compartment door, the storage compartment door may lack space for installation of shelves.

### SUMMARY

Therefore, it is one aspect to provide a refrigerator and an ice-making system thereof, which may maximize space utilization inside a storage compartment.

It is another aspect to provide a refrigerator and an ice-making system thereof, which may prevent an ice-making device and a dispenser unit from hindering the user's view.

Additional aspects will be set forth in part in the description which follows and, in part, will be apparent from the description, or may be learned by practice of the invention.

In accordance with one aspect, a refrigerator includes a body having a storage compartment defined therein, a storage compartment door to open or close the storage compartment at a front side of the body, an ice-making device arranged in the storage compartment to make ice, and a dispenser unit arranged in the storage compartment door, the ice-making device including an ice-making chamber that defines a space independent of the interior of the storage compartment and is horizontally wide and vertically thin, and the dispenser unit being formed at the same height as the ice-making chamber.

The ice-making device may include an icemaker to make ice within the ice-making chamber and an ice storage container arranged in parallel and next to the icemaker to store the ice made by the icemaker.

The dispenser unit may include an ice discharge port oriented obliquely or parallel to a surface of the storage compartment door.

An inclination angle between the ice discharge port and the surface of the storage compartment door may be in a range of about 0 degrees or more and about 60 degrees or less.

The ice-making chamber may have an outer appearance similar to a drawer that is provided in the storage compartment so as to be pulled out.

The dispenser unit may include a discharge chute to guide the ice of the ice-making device to the outside of the storage compartment door, and the discharge chute may be horizontally formed.

The ice-making device may be arranged in a lower region of the storage compartment, and the refrigerator may further include an auxiliary drawer arranged below the ice-making device so as to be pulled out, the auxiliary drawer providing an additional ice storage space.

The ice-making device may be arranged in a central region of the storage compartment.

In accordance with another aspect, a refrigerator includes a body having a storage compartment defined therein, a storage compartment door to open or close the storage compartment at a front side of the body, an ice-making device arranged in the storage compartment to make ice, and a dispenser unit arranged in the storage compartment door, the ice-making device including an ice-making chamber that defines an independent space in an upper region of the storage compartment and is horizontally wide and vertically thin, the storage compartment door including a transfer channel to move the ice of the ice-making device to the dispenser unit, and the transfer channel being embedded in an inner foamed portion of the storage compartment door.

In accordance with a further aspect, an ice-making system of a refrigerator includes an ice-making device arranged in a storage compartment of the refrigerator to make ice and a dispenser unit arranged in the storage compartment door to discharge the ice of the ice-making device, the dispenser unit including an ice discharge port oriented obliquely or parallel to a surface of the storage compartment door, to occupy the minimum rear space of the storage compartment door.

The ice-making device may be horizontally wide and vertically thin and may include an ice-making chamber, an icemaker to make ice in a partial region of the ice-making chamber and an ice storage container arranged in parallel and next to the icemaker to store the ice made by the icemaker.

An inclination angle between the ice discharge port and the surface of the storage compartment door may be in a range of about 0 degrees or more and about 60 degrees or less.

The ice-making chamber may have an outer appearance similar to a drawer that is provided in the storage compartment so as to be pulled out.

The dispenser unit may be formed at the same height as the ice-making chamber.

The dispenser unit may include a discharge chute to guide the ice of the ice-making device to the outside of the storage compartment door, and the discharge chute may be horizontally formed.

The ice-making device may be arranged in a lower region of the storage compartment, and the refrigerator may further include an auxiliary drawer arranged below the ice-making device so as to be pulled out, the auxiliary drawer providing an additional ice storage space.

The ice-making device may be arranged in a central region of the storage compartment.

The ice-making device may be arranged in an upper region of the storage compartment, the storage compartment door may include a transfer channel to move the ice of the ice-making device to the dispenser unit, and the transfer channel may be embedded in an inner foamed portion of the storage compartment door.

### BRIEF DESCRIPTION OF THE DRAWINGS

These and/or other aspects will become apparent and more readily appreciated from the following description of the embodiments, taken in conjunction with the accompanying drawings of which:
FIG. 1 is a sectional view of a refrigerator in accordance with one embodiment;
FIG. 2A is a perspective view illustrating an interior configuration of the refrigerator in accordance with the embodiment;
FIG. 2B is a sectional view illustrating an interior configuration of an ice-making device;
FIG. 2C is a sectional view illustrating a left storage compartment door of FIG. 2A;
FIG. 3A is a perspective view illustrating an interior configuration of a refrigerator in accordance with another embodiment;
FIG. 3B is a sectional view illustrating an ice-making device of FIG. 3A;
FIG. 3C is a sectional view illustrating a left storage compartment door of FIG. 3A;
FIG. 4A is a perspective view illustrating an interior configuration of a refrigerator in accordance with a further embodiment;
FIG. 4B is a sectional view illustrating an ice-making device of FIG. 4A; and
FIG. 4C is a sectional view illustrating a left storage compartment door of FIG. 4A.

### DETAILED DESCRIPTION

Reference will now be made in detail to the embodiments, examples of which are illustrated in the accompanying drawings, wherein like reference numerals refer to like elements throughout.

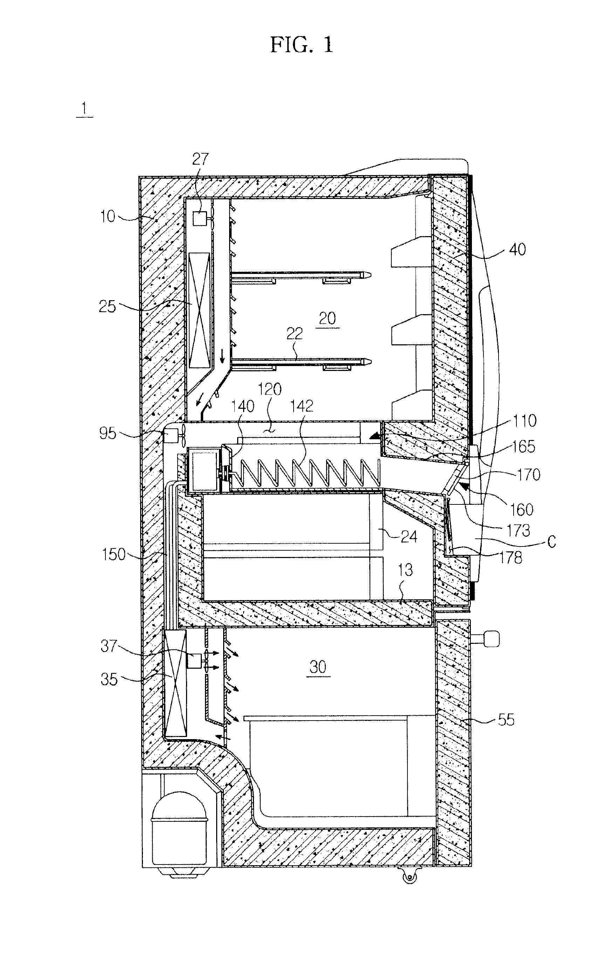

FIG. 1 is a sectional view of a refrigerator in accordance with one embodiment.

The refrigerator 1 in accordance with the embodiment, as illustrated in FIG. 1, includes a body 10 in which an upper first storage compartment 20 and a lower second storage compartment 30 are separated from each other by a partition wall 13.

The first storage compartment 20 and the second storage compartment 30 are forwardly open. The upper first storage compartment 20 is opened or closed by a left storage compartment door 40 and a right storage compartment door 50. The lower second storage compartment 30 is opened or closed by a lower storage compartment door 55. The left storage compartment door 40 and the right storage compartment door 50 are rotatably coupled respectively to opposite lateral sides of the body 10 to open or close the upper first storage compartment 20 via leftward or rightward rotation thereof. The lower storage compartment door 55 is forwardly or rearwardly movable to open or close the lower second storage compartment 30 in a drawer manner.

The first storage compartment 20 contains shelves 22 and drawers 24 for food storage.

The first storage compartment 20 may serve as a refrigerating compartment, and the second storage compartment 30 may serve as a freezing compartment. Of course, the roles of these storage compartments may be interchanged.

For example, the refrigerator 1 of FIG. 1 is a so-called French type refrigerator that is one kind of Bottom Mounted Freezer (BMF) type refrigerators, in which the second storage compartment 30 is set to a freezing compartment and the first storage compartment 20 is set to a refrigerating compartment. Thus, the storage compartments 20 and 30 are horizontally wide and thus, are suitable to store an item having a relatively great width, such as pizza, etc.

A first storage compartment evaporator 25 for cooling of the first storage compartment 20 and a first storage compartment circulating fan 27 for circulation of cold air in the first storage compartment 20 are mounted in a rear region of the first storage compartment 20.

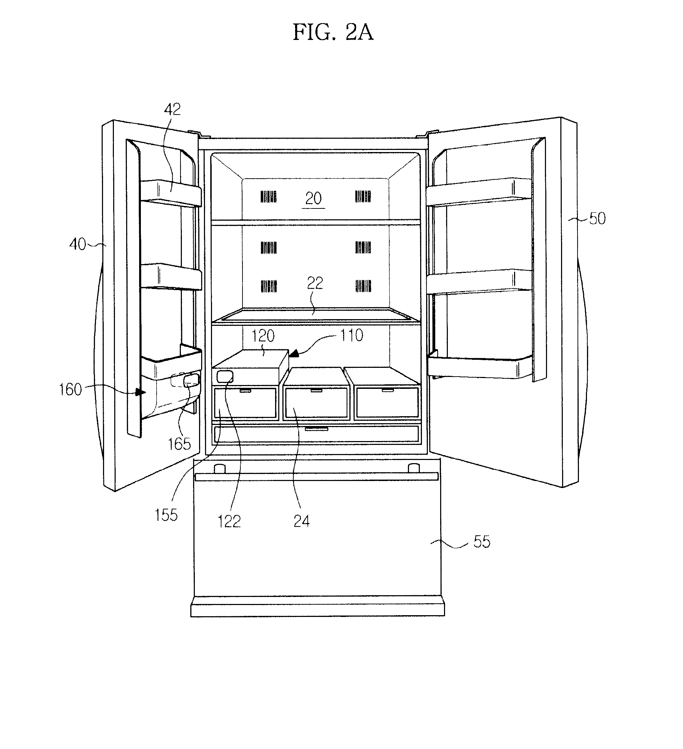

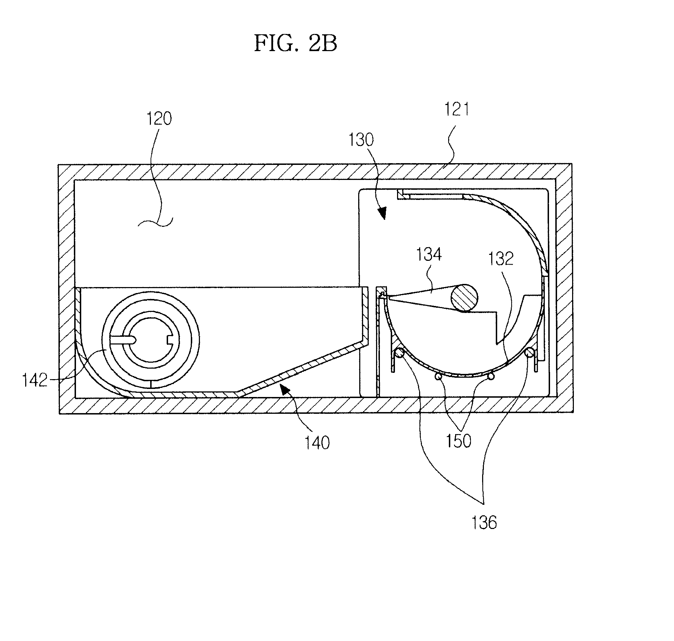

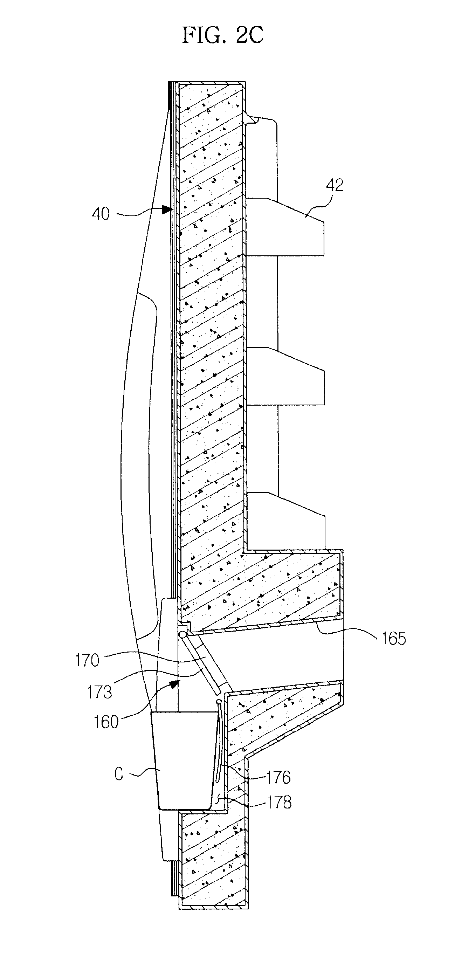

A second storage compartment evaporator 35 for cooling of the second storage compartment 30 and a second storage compartment circulating fan 37 for circulation of cold air in the second storage compartment 30 are mounted in a rear region of the second storage compartment 30. FIG. 2A is a perspective view illustrating an interior configuration of the refrigerator in accordance with the embodiment, FIG. 2B is a sectional view illustrating an interior configuration of an ice-making device, and FIG. 2C is a sectional view illustrating a left storage compartment door of FIG. 2A.

As illustrated in FIGS. 1 and 2A, an ice-making device 110 to make ice is mounted in a left lower region of the first storage compartment 20. A dispenser unit 160 is mounted in the left storage compartment door 40 corresponding to the ice-making device 110 to allow a user to take the ice of the icemaker 110 from the front side of the left storage compartment door 40.

The ice-making device 110 includes an ice-making chamber 120 defining an independent space within the first storage compartment 20, an icemaker 130 to make ice within the ice-making chamber 120, and an ice storage container 140 arranged in parallel and next to the icemaker 130 to store ice made by the icemaker 130.

The ice-making chamber 120 is a space defined by an insulating partition wall 121 independently of the first storage compartment 20, in which the icemaker 130 and the ice storage container 140 may be received.

The ice-making chamber 120 is horizontally wide and vertically thin. That is, differently from a conventional ice-making chamber that is installed vertically and thus, occupies much interior space of the storage compartment, the ice-making chamber 120 in accordance with the embodiment is horizontally wide and vertically thin and thus, does not occupy much interior space of the first storage compartment 20. For example, a horizontal width of the ice-making chamber 120 is at least three times the vertical height of the ice-making chamber.

The ice-making chamber 120 has an outer appearance similar to the drawer 24 and thus, the user may not easily distinguish the ice-making chamber 120 from the drawer 24. Viewed in terms of aesthetics, the ice-making chamber 120 provides an aesthetically pleasing appearance, differently from the conventional ice-making chamber.

A blowing fan 95 is attached to an inner rear surface of the ice making chamber 120 for circulation of interior air of the ice-making chamber 120. A refrigerant pipe 150 is branched from the freezing compartment evaporator 35 to extend into the ice-making chamber 120. The refrigerant pipe 150 is used for circulation of a refrigerant based on a refrigeration cycle.

As illustrated in FIG. 2B, the icemaker 130 is located at the right side and the ice storage container 140 is located at the left side within the ice-making chamber 120. That is, the icemaker 130 and the ice storage container 140 are horizontally arranged parallel to each other. The ice-making chamber 120 has an ice discharge port 122 formed at a front position thereof toward the ice storage container 140, to enable discharge of ice from the interior of the ice-making chamber 120.

The icemaker 130 includes an electric element room (not shown) in which a variety of electronic elements is received, an ice-making tray 132 to receive ice therein, an ice-separating member 134 located above the ice-making tray 132 to separate ice, an ice-separating heater 136 located below the ice-making tray 132 to heat the ice-making tray 132, and the refrigerant pipe 150 located below the ice-making tray 132 so as not to overlap with the ice-separating heater 136.

In operation of the icemaker 130, after water is supplied into the ice-making tray 132, the water is frozen into ice in the ice-making tray 132 by the refrigerant circulating in the refrigerant pipe 150 based on the refrigeration cycle. As the ice-separating heater 136 heats the ice-making tray 132 and subsequently, the ice-separating member 134 is rotated, the ice is moved into the ice storage container 140.

The ice storage container 140 includes an ice transfer device 142 to discharge the ice through the ice discharge port 122. The ice inside the ice-making chamber 120 is discharged out of the ice-making chamber 120 via rotation of the ice transfer device 142.

In addition to the ice storage container 140, an auxiliary drawer 155 is provided below the ice-making device 110 to provide an additional ice storage space. The auxiliary drawer 155 has the same outer appearance as the drawer 24 inside the first storage compartment 20 and is installed so as to be pulled out. Since the storage capacity of the ice storage container 140 may be insufficient if a required amount of ice is excessively great, an extra amount of ice may be stored in the auxiliary drawer 155 to allow the user to use the ice inside the auxiliary drawer 155 as needed.

As illustrated in FIG. 2C, the dispenser unit 160 is mounted in the left storage compartment door 40 to allow the user to retrieve the ice of the ice-making device 110 from the outside. The dispenser unit 160 includes a discharge chute 165 to guide the ice of the ice-making device 110 to the outside of the left storage compartment door 40, an ice discharge port 170 provided at a distal end of the discharge chute 165, an opening/closing cover 173 to open or close the ice discharge port 170 via rotation thereof, an operating lever 176 to rotate the opening/closing cover 173, and an ice receiving space 178 to receive the ice discharged from the ice discharge port 170.

The dispenser unit 160 is formed at the same height as the ice-making chamber 120, so as not to occupy an unnecessary rear space of the left storage compartment door 40. This increases a space for installation of the door shelves 42, more particularly, door shelves having a greater width.

The discharge chute 165 is horizontally arranged to allow the dispenser unit 160 to occupy the minimum space of the left storage compartment door 40 and to enhance space utilization of the door shelves 42. Specifically, the discharge chute 165 provides the minimum ice movement distance inside the dispenser unit 160 and consequently, allows the dispenser unit to occupy the minimum space of the left storage compartment door 40.

The ice discharge port 170 may be oriented obliquely or parallel to a surface of the left storage compartment door 40. A conventional ice discharge port is oriented perpendicular to the surface of the storage compartment door (i.e. is oriented parallel to a refrigerator installation plane) and thus, the overall thickness of the dispenser unit 160 is inevitably thick. On the other hand, in accordance with the embodiment of the present invention, the ice discharge port 170 is oriented obliquely or parallel to the surface of the left storage compartment door 40, thus allowing the dispenser unit 160 to occupy a reduced thickness of the left storage compartment door 40. An inclination angle between the ice discharge port 170 and the surface of the left storage compartment door 40 may be in a range of about 0∼60 degrees, and more particularly, may be about 45 degrees.

In operation of the dispenser unit 160, if the user pushes the operating lever 175 with a cup C, the opening/closing cover 173 is rotated to open the ice discharge port 170, allowing the ice having passed through the discharge chute 165 to be discharged into the cup C located in the ice receiving space 178.

Hereinafter, another embodiment will be described. A description of the same configuration as the above described embodiment will be omitted.

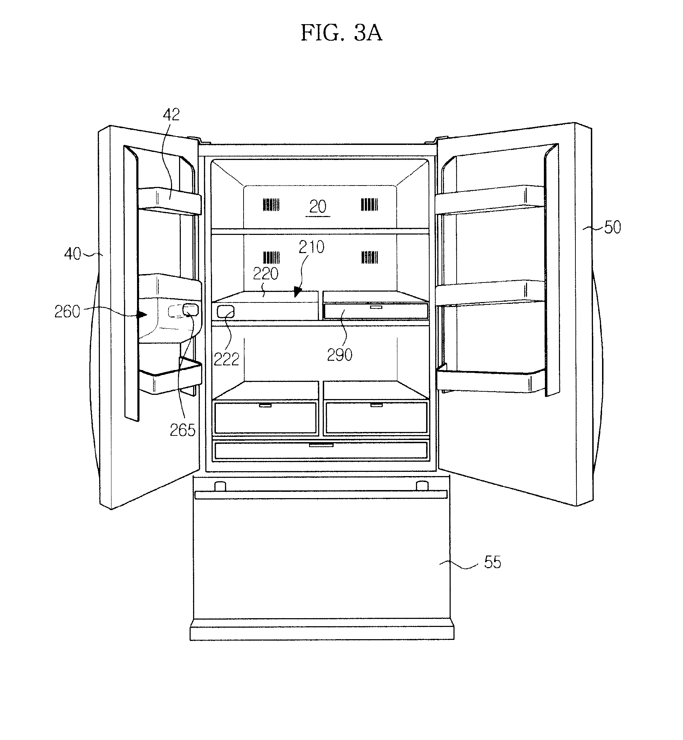

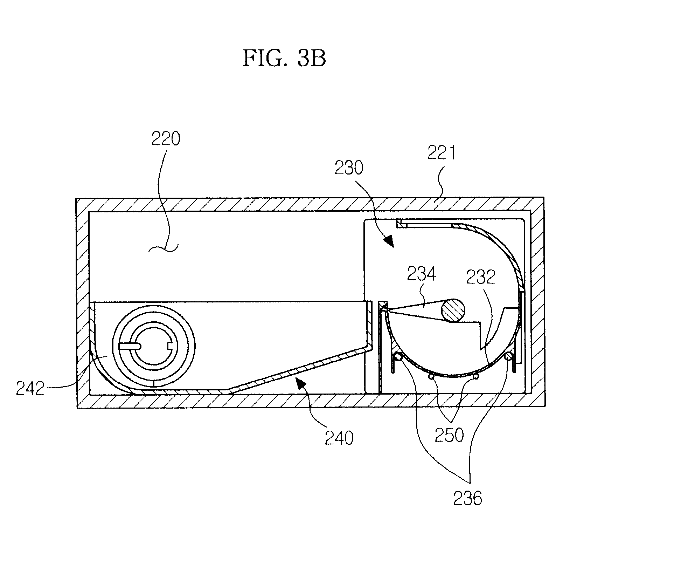

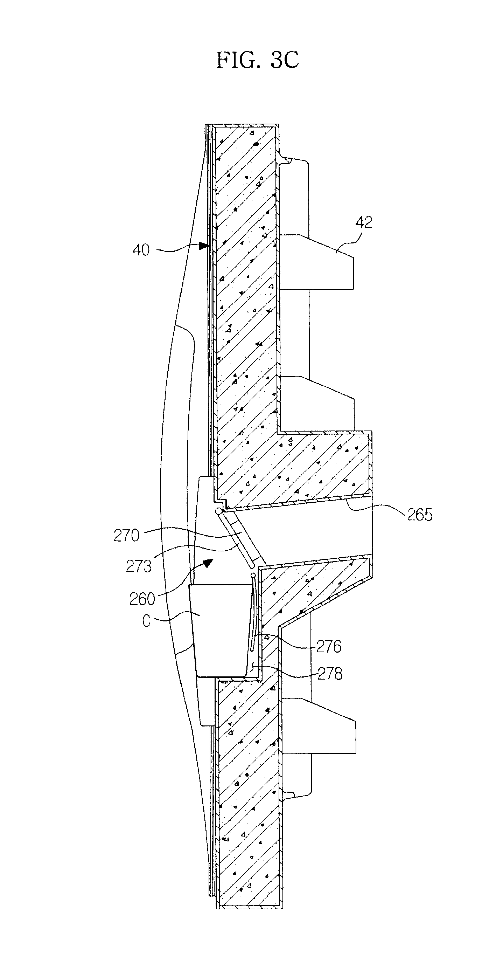

FIG. 3A is a perspective view illustrating an interior configuration of a refrigerator in accordance with another embodiment, FIG. 3B is a sectional view illustrating an ice-making device of FIG. 3A, and FIG. 3C is a sectional view illustrating a left storage compartment door of FIG. 3A.

As illustrated in FIGS. 3A to 3C, in the refrigerator in accordance with the present embodiment, an ice-making device 210 occupies a left central region of the first storage compartment 20 differently from the embodiment of FIG. 2A and thus, a dispenser unit 260 is displaced farther upward than in the embodiment of FIG. 2A. Also, an ice-making chamber 220 is wider and thinner than that of the embodiment of FIG. 2A, to have substantially the same outer appearance as drawer 290 located at the right side of the ice-making device 210.

Thus, the user may mistake the ice-making device 210 for the drawer 290, and also, may easily place food on a wide and flat space on the ice-making device 210. That is, when the left and right storage compartment doors 40 and 50 are opened, the ice-making device 210 provides the user with an open view rather than making the space feel cluttered, increasing user satisfaction.

Other interior configurations of the ice-making device 210, such as an icemaker 230, ice storage container 240, etc., and other interior configurations of the dispenser unit 260, such as a discharge chute 265, ice discharge port 270, etc. are identical to those of the embodiment of FIGS. 2A to 2C. For reference, reference numerals 221, 232, 234, 236, 242 and 250 respectively represent an insulating partition wall, ice-making tray, ice-separating member, ice-separating heater, ice-moving device and refrigerant pipe.

Hereinafter, a further embodiment will be described. A description of the same configuration as the above described embodiment will be omitted.

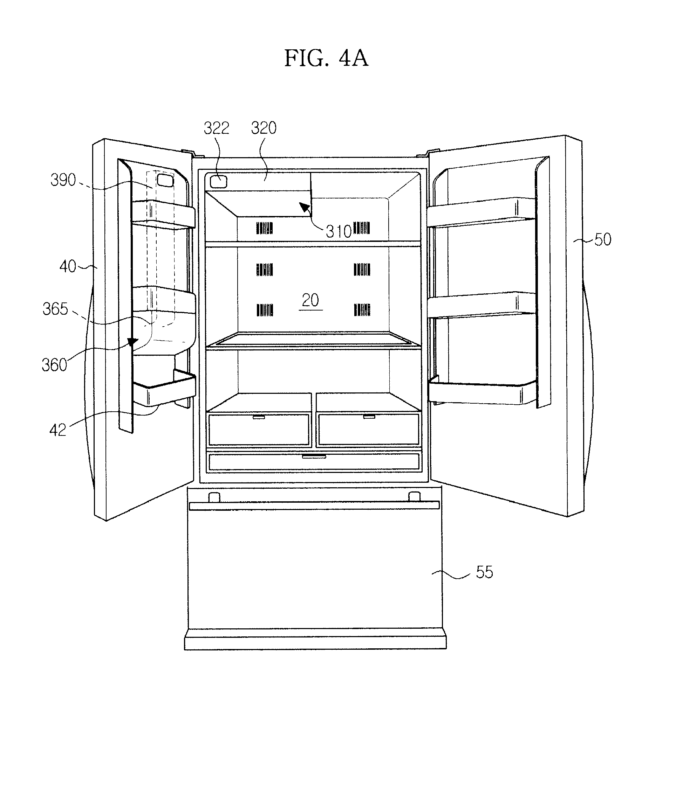

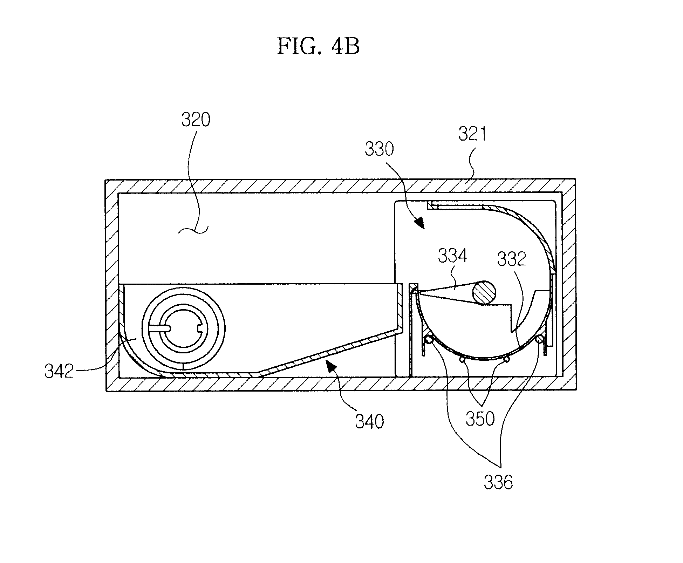

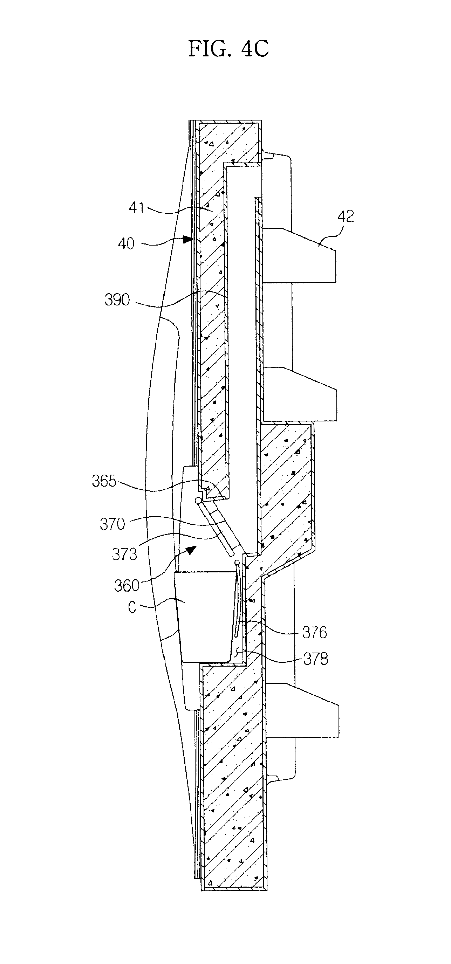

FIG. 4A is a perspective view illustrating an interior configuration of a refrigerator in accordance with a further embodiment, FIG. 4B is a sectional view illustrating an icemaker of FIG. 4A, and FIG. 4C is a sectional view illustrating a left storage compartment door of FIG. 4A.

As illustrated in FIGS. 4A to 4C, in the refrigerator in accordance with the present embodiment, an ice-making device 310 is arranged in a top region of the first storage compartment 20, and the left storage compartment door 40 has a transfer channel 390 to transfer ice from the ice-making device 310 to a dispenser unit 360.

The transfer channel 390 is embedded in an inner foamed portion 41 of the left storage compartment door 40, and serves as a connection passage between an ice discharge port 322 of an ice-making chamber 320 and a discharge chute 365 of the dispenser unit 360. When the transfer channel 390 is provided in the left storage compartment door 40, as compared to a conventional dispenser unit, the dispenser unit 360 may occupy a greatly reduced interior space of the door 40, thus assuring sufficient space utilization of the door shelves 42 and also, may provide an aesthetically pleasing appearance, resulting in enhancement in the decorative quality of the refrigerator.

Other interior configurations of the ice-making device 310, such as an icemaker 330, ice storage container 340, etc., and other interior configurations of the dispenser unit 360, such as an ice discharge port 370, etc. are identical to those of the embodiment of FIGS. 2A to 2C. For reference, reference numerals 331, 332, 334, 336, 342 and 350 respectively represent an insulating partition wall, ice-making tray, ice-separating member, ice-separating heater, ice-moving device and refrigerant pipe.

As is apparent from the above description, in a refrigerator and an ice-making system thereof according to the embodiments of the present invention, an ice-making device has a wide and thin shape and a dispenser unit occupies the minimum interior space, whereby maximized space utilization inside a storage compartment and door shelf may be accomplished.

Further, as a result of providing an ice-making chamber with a shape similar to a drawer provided in the storage compartment, it may be possible to enhance the aesthetics of the outer appearance of the ice-making device.

Although a few embodiments have been shown and described, it would be appreciated by those skilled in the art that changes may be made in these embodiments without departing from the principles and spirit of the invention, the scope of which is defined in the claims and their equivalents.

## Claims

1. An ice-making system of a refrigerator comprising an ice-making device arranged in a storage compartment of the refrigerator to make ice and a dispenser unit arranged in the storage compartment door to discharge the ice of the ice-making device,
wherein the dispenser unit includes an ice discharge port oriented obliquely or parallel to a surface of the storage compartment door, to occupy the minimum rear space of the storage compartment door.

2. The ice-making system according to claim 1, wherein the ice-making device is horizontally wide and vertically thin and includes an ice-making chamber, an icemaker to make ice in a partial region of the ice-making chamber, and an ice storage container arranged in parallel and next to the icemaker to store the ice made by the icemaker.

3. The ice-making system according to claim 1, wherein an inclination angle between the ice discharge port and the surface of the storage compartment door is in a range of about 0 degrees or more and about 60 degrees or less.

4. The ice-making system according to claim 2, wherein the ice-making chamber has an outer appearance similar to a drawer that is provided in the storage compartment so as to be pulled out.

5. The ice-making system according to claim 1, wherein the dispenser unit is formed at the same height as the ice-making chamber.

6. The ice-making system according to claim 5, wherein:
the dispenser unit includes a discharge chute to guide the ice of the ice-making device to the outside of the storage compartment door; and
the discharge chute is horizontally formed.

7. The ice-making system according to claim 1, wherein:
the ice-making device is arranged in a lower region of the storage compartment; and
the refrigerator further comprises an auxiliary drawer arranged below the ice-making device so as to be pulled out, the auxiliary drawer providing an additional ice storage space.

8. The ice-making system according to claim 1, wherein the ice-making device is arranged in a central region of the storage compartment.

9. The ice-making system according to claim 1, wherein:
the ice-making device is arranged in an upper region of the storage compartment;
the storage compartment door includes a transfer channel to move the ice of the ice-making device to the dispenser unit; and
the transfer channel is embedded in an inner foamed portion of the storage compartment door.

10. A refrigerator comprising an ice-making system according to any one of claims 1 to 9.
